# FASCICULE DE BREVET EUROPEEN

(11) **EP 1 038 732 B1**
(45) Date de publication et mention de la délivrance du brevet: **30.07.2003**
(21) Numéro de dépôt: 00400821.5
(22) Date de dépôt: 24.03.2000
(51) Int. Cl.: B60R 19/12

(54) **Pare-chocs muni d'un appui bas**
Stosstange mit unterem Schutzbalken
Bumper including lower protection beam

(30) Priorité: 25.03.1999 FR 9903740
(43) Date de publication de la demande: 27.09.2000
(73) Titulaire: COMPAGNIE PLASTIC OMNIUM, 69007 Lyon (FR)
(72) Inventeur: Cordebar, Francis, 01100 Oyonnax (FR); Moulin, Jean-Paul, 01590 Dortan (FR); Malteste, Stéphane, 01800 Meximieux (FR)
(74) Mandataire: Leszczynski, André

(56) Documents cités:
- DE-A- 19 802 841
- FR-A- 2 445 783
- FR-A- 2 474 982
- US-A- 1 704 768
- US-A- 1 795 727

## Description

La présente invention concerne un pare-chocs muni d'un appui bas.

On sait que les pare-chocs de véhicules automobiles comportent, à environ 50 cm du sol, une partie saillante constituant une zone de premier impact avec un obstacle vertical.

Cette zone de premier contact se trouve sensiblement à la même hauteur sur tous les véhicules d'un même type pour coïncider avec celle d'un autre véhicule en cas de contact avec ce dernier, ce qui est notamment utile en zone urbaine et pour les manoeuvres de stationnement.

Cependant, la hauteur de cette zone d'impact s'avère particulièrement préjudiciable pour les piétons.

En effet, en cas de choc avec un piéton, la zone d'impact vient percuter la jambe du piéton au niveau du genou, ce qui entraîne de graves dommages.

La demande de brevet FR 2 445 783 à partir de laquelle est établi le préambule de la reven-dication 1, décrit un pare-chocs sur lequel sont aménagées des zones de rigidité différente. La zone inférieure présente une possibilité de déformation relativement faible, étant réalisée à faible distance de la bande de pare-chocs. Cette zone comporte de petites nervures intérieures prenant appui sur la bande de pare-chocs, ces nervures pouvant être remplacées par une couche de mousse. Ces petites nervures ou la couche de mousse ne sont pas destinées à rigidifier la zone correspondante.

Il a déjà été proposé (par exemple dans FR-A-2 474 982) de munir le pare-chocs d'une seconde zone d'impact située en dessous de la première zone d'impact, sensiblement à la verticale de cette dernière, cette seconde zone d'impact étant destinée à entrer en contact avec le tibia d'un piéton, lors d'un choc du pare-chocs avec ce dernier.

Selon la présente invention, la partie inférieure du pare-chocs comporte un réseau de nervures qui la rigidifie à hauteur de la seconde zone d'impact.

Selon un mode de réalisation de l'invention, le pare-chocs est muni d'un carénage, également désigné spoiler, qui est rigidifié par ces nervures pour pouvoir résister à des chocs et constituer la seconde zone d'impact du pare-chocs.

L'utilisation d'un tel carénage pour constituer la seconde zone d'impact du pare-chocs permet de limiter le nombre de pièces à assembler.

La partie basse rigidifiée du pare-chocs peut se fixer de différentes manières sur le véhicule.

Une première possibilité de fixation consiste à assujettir cette partie basse rigidifiée du pare-chocs aux longerons du véhicule, avec éventuellement interposition d'une plaque métallique prolongeant les longerons vers le bas jusqu'à la hauteur de la seconde zone d'impact.

Une deuxième possibilité est d'assujettir la partie basse rigidifiée du pare-chocs au berceau moteur du véhicule.

Ces deux modes de fixation présentent l'avantage de solidariser la partie basse du pare-chocs à des éléments du véhicule présentant une forte rigidité de sorte que, en cas de choc avec un piéton, cette partie basse exerce un effort important sur la partie inférieure du tibia du piéton, évitant ainsi un fléchissement important du genou.

On évite ainsi des blessures graves pour le piéton.

Un autre avantage résultant de ces deux modes de fixation réside dans le fait que, en cas de choc relativement important du véhicule avec un obstacle vertical, la seconde zone d'impact absorbe une partie de l'énergie du choc.

La première zone d'impact est ainsi moins sollicitée, ce qui réduit la course de recul du pare-chocs du véhicule.

Une troisième possibilité est d'intégrer la partie basse rigidifiée du pare-chocs au système traditionnel d'absorption d'énergie du véhicule, en reliant la partie basse rigidifiée à la première zone d'impact du pare-chocs.

Selon l'invention on peut ainsi relier la partie basse rigidifiée du pare-chocs, d'une part, au bouclier du véhicule et, d'autre part, aux longerons ou au berceau moteur du véhicule.

La partie basse rigidifiée du pare-chocs constitue ainsi un appui rigide pour la partie inférieure du pare-chocs.

Dans le but de mieux faire comprendre l'invention, on va en décrire maintenant des modes de réalisation donnés à titre d'exemples non limitatifs de la portée de l'invention en référence au dessin annexé dans lequel :
- la figure 1 représente un modèle de jambe, vu en élévation,
- la figure 2 représente, en perspective, une vue schématique d'un pare-chocs à deux zones d'impact, au moment de l'impact avec le modèle de jambe de la figure 1,
- la figure 3 est une vue analogue à la figure 2, montrant le pare-chocs et le modèle de jambe après l'impact,
- la figure 4 est une vue en section de la partie inférieure rigidifiée d'un pare-chocs selon un mode de réalisation de l'invention,
- la figure 4A est une section selon IVA-IVA de la figure 4,
- la figure 5 est une vue analogue à la figure 4 de la partie inférieure rigidifiée d'un pare-chocs selon un second mode de réalisation de l'invention,
- la figure 6 est une vue en perspective d'un demi-carénage d'un pare-chocs selon un troisième mode de réalisation de l'invention, et
- la figure 7 est une vue en perspective de trois-quart arrière de la partie droite d'un pare-chocs comportant le demi-carénage représenté sur la figure 6.

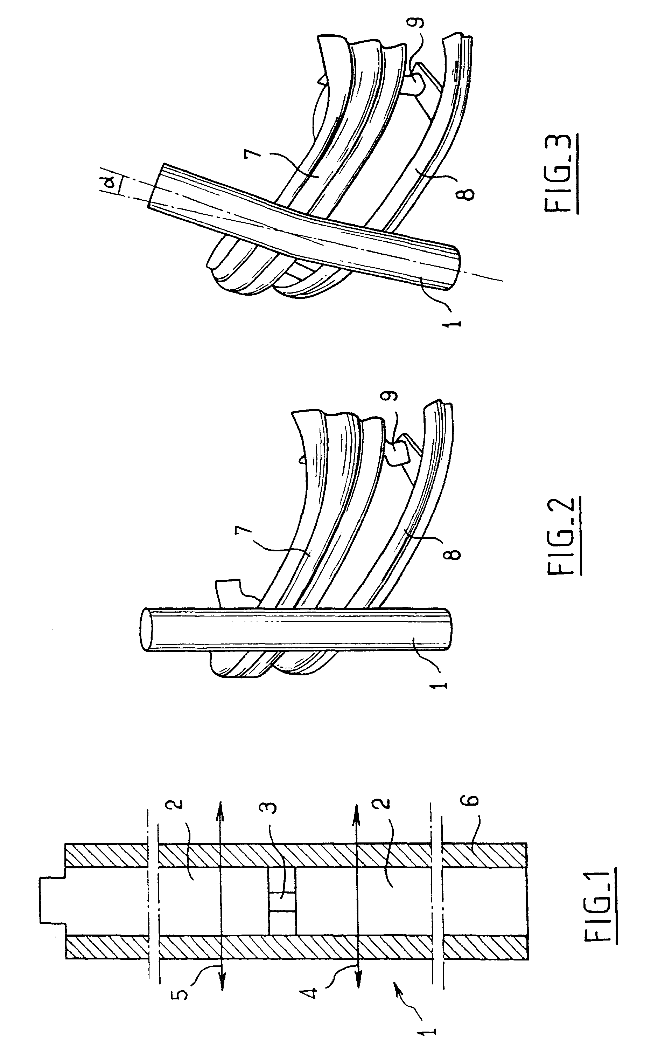

Les figures 1 à 3 permettent de bien comprendre l'intérêt de la seconde zone d'impact du pare-chocs selon l'invention.

Le modèle de jambe 1 utilisé est un impacteur constitué par deux tubes rigides verticaux 2 placés dans l'alignement l'un de l'autre et réunis par une pièce de liaison déformable 3 qui autorise une rotation des deux tubes rigides 2 l'un par rapport à l'autre selon un axe perpendiculaire au plan du dessin et une translation latérale des deux tubes rigides dans le plan de dessin, comme illustré par des flèches 4, 5 sur la figure 1.

L'ensemble est emmanché dans une gaine de mousse 6 qui modélise la peau et les muscles de la jambe.

La zone d'articulation modélise un genou, les barreaux supérieur et inférieur correspondant respectivement au fémur et au tibia de la jambe.

Le jeu de poutres représenté sur les figures 2 et 3 comprend une poutre supérieure 7, qui absorbe les chocs de la première zone d'impact d'un pare-chocs, c'est-à-dire la zone se trouvant sensiblement à hauteur des pare-chocs d'autres véhicules automobiles de même type.

En dessous de cette poutre, se trouve une seconde poutre de renforcement 8, qui est située à une distance du sol d'environ 25 cm.

Dans cet exemple, la seconde poutre est fixée directement sur les longerons (non représentés) du véhicule par interposition d'une plaque métallique 9 sur chaque longeron.

Les deux poutres offrent des faces frontales de réception d'impact situées à la verticale l'une de l'autre.

Lors d'un impact contre une jambe, comme illustré par la figure 2, la poutre inférieure 8 vient au contact de la jambe en même temps que la poutre supérieure 7.

Des essais conduits par la société demanderesse ont démontré qu'à la suite d'un choc à 40 km/heure, l'impacteur de la figure 1 subit une déformation angulaire α autour de l'articulation de 8,1°.

Cette valeur est acceptable car elle n'implique généralement pas de séquelle grave au genou.

A titre de comparaison, des essais réalisés dans les mêmes conditions avec une poutre supérieure seule conduisent à une déformation angulaire de l'impacteur de 16°, soit presque le double de la déformation obtenue avec le jeu de deux poutres.

Avec d'autres pare-chocs traditionnels, on a enregistré des déformations angulaires beaucoup plus importantes, jusqu'à 30°.

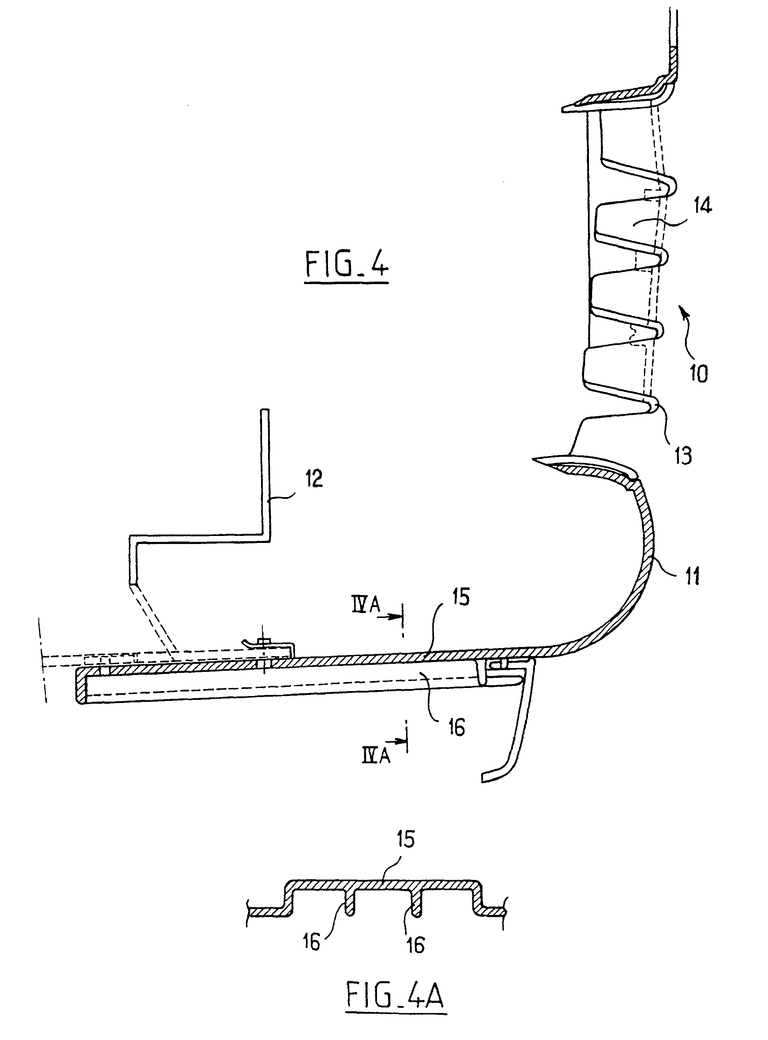

Dans le mode de réalisation de la figure 4, la partie inférieure du pare-chocs 10 comporte une partie nervurée 11 qui vient se fixer, à l'arrière, sur la face avant technique 12 du véhicule et qui vient s'encliqueter, à l'avant, sur la partie supérieure 13 du pare-chocs, laquelle comporte notamment une grille d'entrée d'air 14.

Les nervures 16 sont placées sur la partie horizontale 15 et sont mieux visibles sur la vue de détail de la figure 4A.

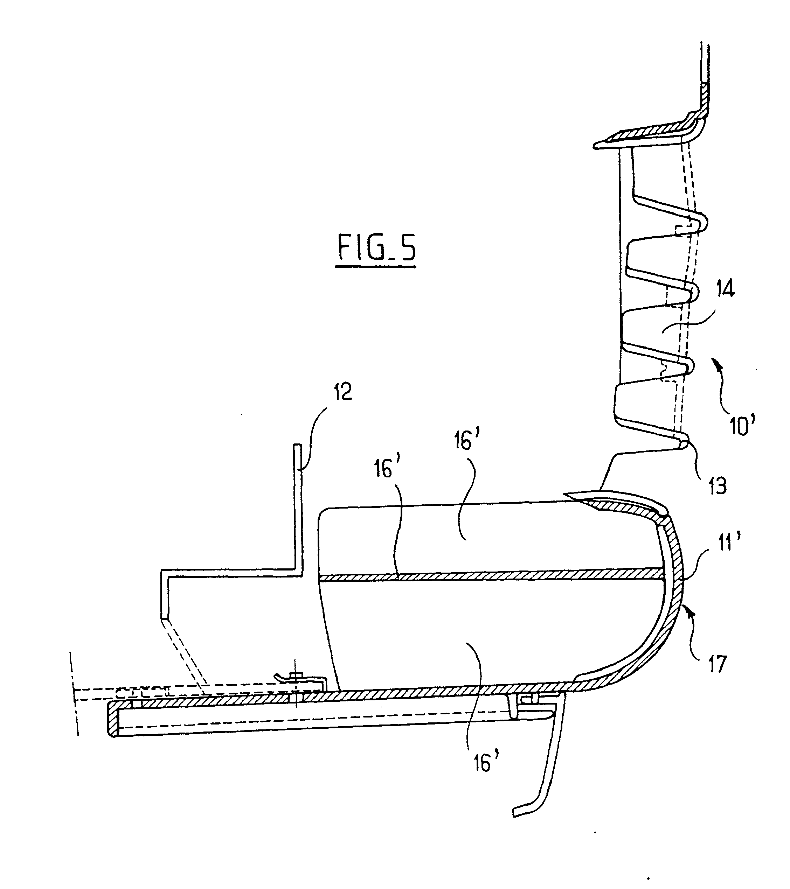

Dans le mode de réalisation de la figure 5, la partie inférieure rigidifiée 11' du pare-chocs comporte un réseau de nervures croisées 16', placées directement derrière la peau 17 du pare-chocs en dessous de la grille d'entrée d'air 14.

Les nervures 16' s'interrompent au voisinage de la peau 17 pour éviter l'apparition de retassures sur la face externe visible de la peau.

En dehors de cette différence, le pare-chocs de la figure 5 est identique à celui de la figure 4 et porte les mêmes chiffres de référence sur le dessin.

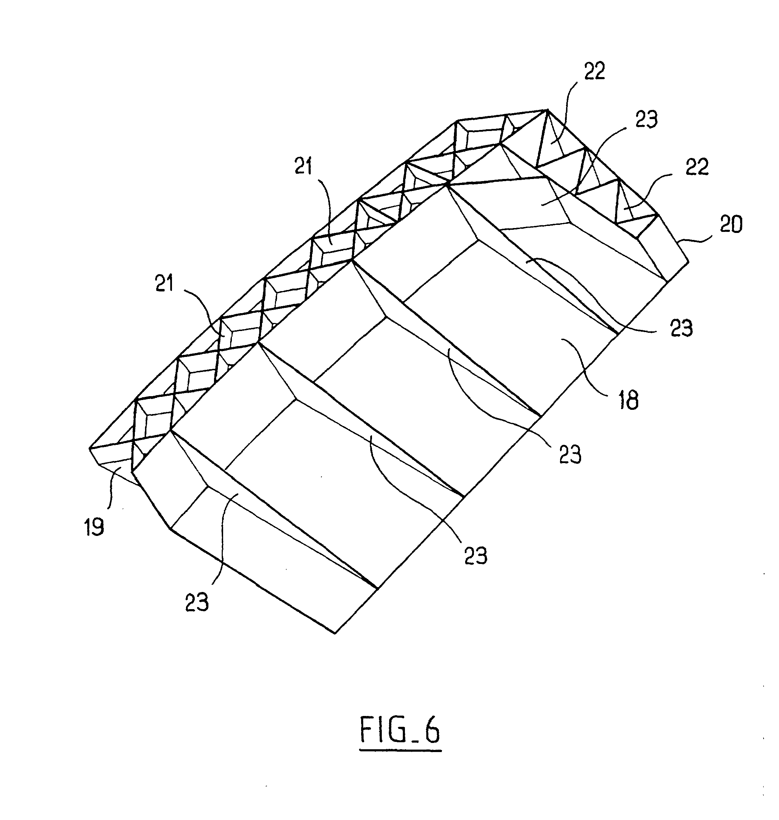

Sur la figure 6, on a représenté la moitié d'un carénage 18 d'un pare-chocs 30 selon un troisième mode de réalisation de l'invention.

Le carénage 18 comporte une partie frontale 19 et deux parties latérales 20, lesquelles parties sont rigidifiées par des réseaux de nervures 21 et 22.

Le carénage 18 comporte également des nervures de renfort 23 placées derrière la partie frontale 19 de façon à rigidifier l'ensemble.

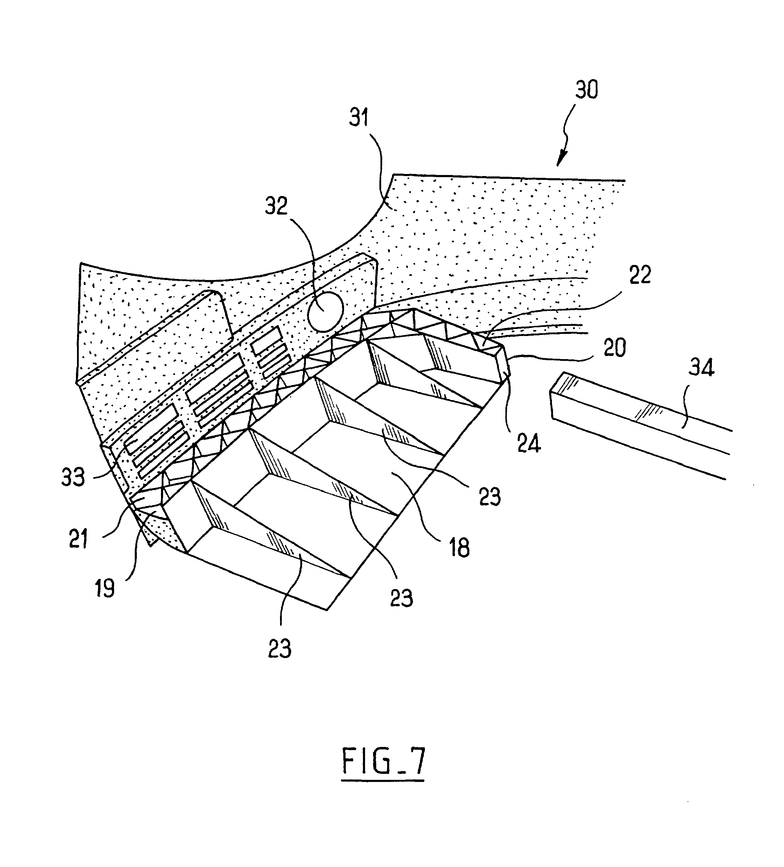

Comme on le voit sur la figure 7, le pare-chocs 30 comprend un bouclier 31 muni de deux ouvertures 32 pour la mise en place de systèmes d'éclairage (non représentés) et de passages 33 destinés à la circulation d'air pour le système de refroidissement du moteur.

Le carénage 18 est fixé à l'arrière sur le bouclier 31 et est assujetti à sa partie 24 aux longerons 34 du véhicule avec éventuellement interposition d'une plaque métallique (comme schématisé en 9 sur la figure 2).

En variante, le carénage peut être fixé au berceau moteur du véhicule (non représenté).

Le carénage 18 constitue ainsi une seconde zone d'impact au sens de l'invention.

## Revendications

1. Pare-chocs de véhicule automobile, comportant, en saillie de sa face frontale, une première zone d'impact (7) destinée à entrer en contact avec un pare-chocs d'un autre véhicule automobile du même type, et une seconde zone d'impact (8) située en dessous de la première zone d'impact, sensiblement à la verticale de cette dernière, cette seconde zone d'impact étant destinée à entrer en contact avec le tibia d'un piéton, lors d'un choc du pare-chocs avec ce dernier, ladite seconde zone d'impact étant constituée par la partie inférieure du pare-chocs **caractérisé par le fait que** la seconde zone d'impact (8) comporte un réseau de nervures (16 ; 16' ; 21 ; 22 ; 23) de rigidification.

2. Pare-chocs selon la revendication 1, **caractérisé par le fait que** lesdites nervures (21 ; 22 ; 23) sont réalisées dans un carénage (18) constituant la seconde zone d'impact du pare-chocs.

3. Pare-chocs selon la revendication 2, **caractérisé par le fait que** ledit carénage (18) est relié au bouclier (31) du véhicule.

4. Pare-chocs selon la revendication 2 ou 3, **caractérisé par le fait que** ledit carénage (18) est relié aux longerons (34) du véhicule.

5. Pare-chocs selon la revendication 2 ou 3, **caractérisé par le fait que** ledit carénage (18) est relié au berceau moteur du véhicule.

6. Pare-chocs selon l'une quelconque des revendications précédentes, **caractérisé par le fait que** la partie inférieure du pare-chocs comporte un réseau de nervures croisées (16').

7. Pare-chocs selon l'une quelconque des revendications 2 à 6, **caractérisé par le fait que** le carénage (18) comporte une partie frontale (19) et deux parties latérales (20), ces parties (19,20) étant rigidifiées par des réseaux de nervures (21,22).

8. Pare-chocs selon la revendication 7, **caractérisé par le fait que** le carénage comporte des nervures de renfort (23) placées derrière la partie frontale (19).

## Patentansprüche

1. Kraftfahrzeugstoßstange mit - von ihrer Stirnseite vorragend - einem ersten Stoßbereich (7), der mit einer Stoßstange eines anderen Kraftfahrzeugs gleichen Typs in Kontakt kommen soll, sowie einem zweiten Stoßbereich (8), welcher unterhalb des ersten Stoßbereichs, im Wesentlichen in der Senkrechten dieses gelegen ist, wobei dieser zweite Stoßbereich bei einem Zusammenstoß der Stoßstange mit einem Fußgänger mit dessen Schienbein in Kontakt kommen soll, wobei der zweite Stoßbereich von dem unteren Teil der Stoßstange gebildet ist, **dadurch gekennzeichnet, dass** der zweite Stoßbereich (8) ein Netz von Versteifungsrippen (16; 16'; 21; 22; 23) aufweist.

2. Stoßstange nach Anspruch 1, **dadurch gekennzeichnet, dass** die Rippen (21; 22; 23) in einer den zweiten Stoßbereich der Stoßstange bildenden Verkleidung (18) ausgebildet sind.

3. Stoßstange nach Anspruch 2, **dadurch gekennzeichnet, dass** die Verkleidung (18) mit dem Schild (31) des Fahrzeugs verbunden ist.

4. Stoßstange nach Anspruch 2 oder 3, **dadurch gekennzeichnet, dass** die Verkleidung (18) mit den Längsträgern (34) des Fahrzeugs verbunden ist.

5. Stoßstange nach Anspruch 2 oder 3, **dadurch gekennzeichnet, dass** die Verkleidung (18) mit der Motorlagerung des Fahrzeugs verbunden ist.

6. Stoßstange nach irgendeinem der vorhergehenden Ansprüche, **dadurch gekennzeichnet, dass** der untere Teil der Stoßstange ein Netz von Kreuzrippen (16') aufweist.

7. Stoßstange nach irgendeinem der Ansprüche 2 bis 6, **dadurch gekennzeichnet, dass** die Verkleidung (18) ein Frontteil (19) und zwei Seitenteile (20) aufweist, wobei diese Teile (19, 20) durch Netze von Rippen (21, 22) versteift sind.

8. Stoßstange nach Anspruch 7, **dadurch gekennzeichnet, dass** die Verkleidung Verstärkungsrippen (23) aufweist, die hinter dem Frontteil (19) angeordnet sind.

## Claims

1. Motor-vehicle bumper including a first impact zone (7), which projects from its front face and is intended to enter into contact with a bumper of another motor vehicle of the same type, and a second impact zone (8), which is situated below the first impact zone, substantially vertically with respect to the latter, this second impact zone being intended to enter into contact with the tibia of a pedestrian when there is a collision between the bumper and the said pedestrian, the said second impact zone being constituted by the lower part of the bumper, **characterized in that** the second impact zone (8) includes a network of stiffening ribs (16; 16'; 21; 22; 23).

2. Bumper according to Claim 1, **characterized in that** the said ribs (21; 22; 23) are formed in a fairing (18) constituting the second impact zone of the bumper.

3. Bumper according to Claim 2, **characterized in that** the said fairing (18) is linked to the protective moulding (31) of the vehicle.

4. Bumper according to Claim 2 or 3, **characterized in that** the said fairing (18) is linked to the longitudinal members (34) of the vehicle.

5. Bumper according to Claim 2 or 3, **characterized in that** the said fairing (18) is linked to the engine mounting of the vehicle.

6. Bumper according to any one of the preceding claims, **characterized in that** the lower part of the bumper includes a network of crosswise ribs (16').

7. Bumper according to any one of Claims 2 to 6, **characterized in that** the fairing (18) includes a front part (19) and two lateral parts (20), these parts (19, 20) being stiffened by networks of ribs (21, 22).

8. Bumper according to Claim 7, **characterized in that** the fairing includes reinforcing ribs (23) placed behind the front part (19).
